# EUROPÄISCHE PATENTSCHRIFT

(11) **EP 2 180 807 B1**
(45) Veröffentlichungstag und Bekanntmachung des Hinweises auf die Patenterteilung: **26.06.2013**
(21) Anmeldenummer: 09780514.7
(22) Anmeldetag: 13.07.2009
(51) Int. Cl.: A44B 11/25, B60R 22/185, B60R 22/18

(54) **SCHLOSSUMLENKEINRICHTUNG**
LOCK DEFLECTION DEVICE
DISPOSITIF DE RENVOI DE CEINTURE DE SECURITE

(30) Priorität: 13.08.2008 DE 102008037963
(43) Veröffentlichungstag der Anmeldung: 05.05.2010
(73) Patentinhaber: Takata AG, 63743 Aschaffenburg (DE)
(72) Erfinder: HEYM, Axel, 13156 Berlin (DE); YOSHIKAWA, Hiromichi, 10115 Berlin (DE)
(74) Vertreter: Baumgärtel, Gunnar
(86) Internationale Anmeldenummer: PCT/EP2009/058925
(87) Internationale Veröffentlichungsnummer: WO 2010/018040

(56) Entgegenhaltungen:
- EP-A- 1 676 760
- DE-A1- 3 043 432
- US-A- 5 058 244
- US-A- 5 100 176

## Beschreibung

Die Erfindung betrifft eine Schlossumlenkeinrichtung für ein Kraftfahrzeug zum Umlenken eines Sicherheitsgurtes, mit einer Schlosszunge zum Festlegen an einer Schlossschnalle und einem mit der Schlosszunge verbundenen ersten Anlagebereich, um den der Sicherheitsgurt zum Umlenken des Sicherheitsgurtes herumlegbar ist, so dass der Sicherheitsgurt in ein Schultersegment und ein Beckensegment unterteilt wird, die in unterschiedlichen Richtungen vom ersten Anlagebereich abgehen, wobei der erste Anlagebereich aus einer Anfangsposition, in der der Sicherheitsgurt am ersten Anlagebereich entlang gleiten kann, in eine Endposition bewegbar ist.

Eine derartige Umlenkung ist durch die EP 1676760 bekannt.

Der Erfindung liegt das Problem zugrunde, eine verbesserte Schlossumlenkeinrichtung der eingangs genannten Art bereitzustellen.

Dieses Problem wird durch eine Schlossumlenkeinrichtung mit den Merkmalen des Anspruchs 1 gelöst.

Danach ist ein mit der Schlosszunge verbundener separater zweiter Anlagebereich vorgesehen, der dazu eingerichtet und vorgesehen ist, erst bei einem aus der Anfangsposition herausbewegten ersten Anlagebereich den Sicherheitsgurt zu kontaktieren, um ein Entlanggleiten des Sicherheitsgurtes am ersten Anlagebereich bzw. der Umlenkeinrichtung zu hemmen.

Insbesondere ist der erste Anlagebereich zur Begrenzung einer resultierenden, am Sicherheitsgurt angreifenden Kraft aus der Anfangsposition in die Endposition bewegbar. D.h., es findet eine Kraftbegrenzung am unteren Schultergurtsegment bei gleichzeitiger Sperrung (der Beckengurt oder das Beckensegment ist am Gurtschloss fixiert) oder Hemmung (dem Entlanggleiten des Sicherheitsgurtes an der Schlossumlenkeinrichtung wird ein erhöhter Widerstand entgegen gesetzt) des Beckengurtes statt.

So wird eine Reduktion der Brusteindrückung einer angeschnallten Person im Crashfall, und zwar durch Reduktion der resultierenden Gurtkraft im Schultergurt (Schultersegment), ohne gleichzeitige Reduktion der Beckengurtkraft (Beckensegmentkraft) ermöglicht.

Zum Verbinden des ersten Anlagebereiches mit der Schlosszunge ist insbesondere ein bewegbarer Bereich der Schlossumlenkeinrichtung vorgesehen, über den der erste Bereich mit der Schlosszunge der Schlossumlenkeinrichtung bzw. einem Trägerteil der Schlossumlenkeinrichtung verbunden ist, von dem die Schlosszunge abgeht, wobei diese einstückig an das Trägerteil angeformt sein kann.

Der bewegbaren Bereich ist vorzugsweise dazu eingerichtet und vorgesehen, derart mit dem Sicherheitsgurt zusammen zu wirken, dass der bewegbare Bereich durch eine am Schultersegment angreifende Kraft eine Bewegung ausführt, bei der der erste Anlagebereich aus der Anfangsposition in die Endposition mitgenommen wird. Bei dieser Bewegung handelt es sich um eine mit einer Verformung einhergehende Schwenkbewegung, wobei die Verformung insbesondere inelastisch (plastisch) oder elastisch sein kann. Bei der Verformung handelt es sich beispielsweise um eine Biegung des bewegbaren Bereiches, etwa indem ein Abschnitt des bewegbaren Bereiches gebogen wird, so dass ein daran angrenzender Abschnitt des bewegbaren Bereiches verschwenkt wird.

Durch diese Bewegung des bewegbaren Bereiches wird das Schultersegment derart entlastet, dass die resultierende, an dem Schultersegment angreifende Kraft begrenzt wird.

Vorteilhafte Ausgestaltungen der Erfindung sind in den Unteransprüchen angegeben sowie nachfolgend beschrieben.

Weiterhin weist bevorzugt der bewegbare Bereich in der Anfangsposition des ersten Anlagebereiches eine Raumlage auf, die verhindert, dass der um den ersten Anlagebereich bzw. den bewegbaren Bereich herum gelegte Sicherheitsgurt den zweiten Anlagebereich berühren (kontaktieren) kann, wohingegen bei einem aus der Anfangsposition herausbewegten ersten Anlagebereich bzw. bewegbaren Element der bewegbare Bereich eine Raumlage aufweist, derart, dass der um den ersten Anlagebereich bzw. den bewegbaren Bereich herum gelegte Sicherheitsgurt auch am zweiten Anlagebereich anliegt. Der bewegbare Bereich bildet bevorzugt einen verschwenkbaren Hebel aus, wobei die Schwenkachse bevorzugt parallel zu oder in einer Ebene verläuft, entlang der sich die Schlosszunge oder ein Trägerteil des bewegbaren Bereiches erstreckt.

Bei der vorliegenden Erfindung kommt der Sicherheitsgurt mit dem weiteren, festen Anlagebereich (zweiter Anlagebereich) der Schlossumlenkeinrichtung erst in Kontakt, nachdem der bewegbare Bereich mit dem ersten Anlagebereich aus seiner Anfangsstellung (Anfangsposition) herausbewegt bzw. verschwenkt wurde.

Vorzugsweise ist der bewegbare Bereich einstückig an die Schlosszunge angeformt oder alternativ hierzu an der Schlosszunge bzw. dem Trägerteil befestigt, d.h., der bewegbare Bereich kann ein separates Teil darstellen, wobei der bewegbare Bereich bei einem Verschwenken gebogen wird (siehe oben). Eine solche Biegung stellt sich vorzugsweise an einer Basis (Endbereiche) des bewegbaren Bereiches ein, über die der bewegbare Bereich einstückig an ein Teil (Trägerteil) der Schlossumlenkeinrichtung angeformt ist bzw. mit dem er über ein Befestigungsmittel verbunden ist. Der erste Anlagebereich selbst kann einstückig an den bewegbaren Bereich angeformt sein.

Vorzugsweise ist der zweite Anlagebereich beabstandet zum bewegbaren Bereich an der Schlossumlenkeinrichtung vorgesehen, wobei bevorzugt der zweite Anlagebereich bei der Bewegung des ersten Anlagebereichs in die Endposition in seiner Lage bezüglich der Schlosszunge nicht verändert wird.

Des Weiteren wird der Sicherheitsgurt zum Fixieren an der Schlossumlenkeinrichtung bevorzugt nicht durch den bewegbaren Bereich gegen den zweiten Anlagebereich gedrückt, sondern der Sicherheitsgurt kommt vorzugsweise zur Anlage an den zweiten Anlagebereich, indem der bewegbare Bereich seine Lage im Raum ändert (durch die Schwenk- bzw. Biegebewegung). Die Fixierung erfolgt also allein durch die Wechselwirkung (Reibung) zwischen dem Sicherheitsgurt und dem zweiten Anlagebereich. Vorzugsweise kontaktiert der Sicherheitsgurt die Schlossumlenkeinrichtung lediglich über die beiden Anlagebereiche. Insbesondere kontaktiert der Sicherheitsgurt den bewegbaren Bereich lediglich über den ersten Anlagebereich.

Der zweite Anlagebereich dient also der Fixierung des Sicherheitsgurtes am Schlossumlenkelement. Fixierung bedeutet dabei nicht, dass eine Relativbewegung im Crashfall vollständig unterbunden sein muss. Diese kann auch auf einem, im Vergleich zur normalen Gebrauchssituation (bewegbarer Bereich in Ausgangsstellung oder Anfangsposition), erhöhten Kraftniveau möglich sein. Zum Hemmen des Entlanggleitens des Sicherheitsgurtes an der Umlenkeinrichtung ist der zweite Anlagebereich insbesondere an einem sich verjüngenden Ausschnitt der Schlossumlenkeinrichtung (am Trägerteil) vorgesehen, der insbesondere die Form eines Keiles mit einer Kerbe an der Keilspitze aufweist, wobei der Sicherheitsgurt in jenen Ausschnitt, insbesondere die Kerbe, herein gezogen wird, wenn er zur Anlage an den zweiten Anlagebereich gelangt, wobei der Sicherheitsgurt am Ausschnitt festgeklemmt werden kann. Oder anders gesagt, der Ausschnitt wird durch aufeinander zu laufende, einander gegenüber liegende Ränder begrenzt, wobei die beiden Ränder je einen Randabschnitt aufweisen, wobei die beiden Randabschnitte zusammengenommen die besagte Kerbe bilden und sich (in einem Punkt) treffen, und wobei jene Randabschnitte einen kleineren Winkel einschließen als die von jenen Randabschnitten abgehenden Randabschnitte, die den restlichen Ausschnitt begrenzen.

In einer Variante der Erfindung ist der erste Anlagebereich einstückig an die Schlosszunge angeformt, und zwar insbesondere über den bewegbaren Bereich und bevorzugt über das daran einstückig angeformte Trägerteil zum Tragen des bewegbaren Bereiches, wobei insbesondere an jenem Trägerteil der zweite Anlagebereich vorgesehen ist, und wobei insbesondere von jenem Trägerteil die Schlosszunge abgeht, die einstückig an das Trägerteil angeformt sein kann, jedoch auch in sonstiger Weise am Trägerteil befestigt sein kann.

Somit kann diese Ausführungsform einer Schlossumlenkeinrichtung mit Kraftbegrenzer - und Sperrfunktion durch ein einziges Stanzteil (aus einem Metall) realisiert werden, das zumindest abschnittsweise mit einem Kunststoff umhüllt sein kann.

In einer alternativen Variante der Erfindung ist der bewegbare Bereich als ein separates Teil ausgeführt, das mit dem Trägerteil über ein zusätzliches Befestigungsmittel verbunden ist, wobei es sich bei jenem Befestigungsmittel insbesondere um eine Schweißverbindung, eine Nietverbindung oder eine Schraubverbindung handeln kann.

Bezüglich dieser beiden Ausführungsformen kann der bewegbare Bereich im Wesentlichen U-förmig ausgebildet sein, also einen mittleren Steg aufweisen, von dem zwei Seitenschenkel abstehen, die jeweils einen freien Endbereich aufweisen, wobei der bewegbare Bereich über diese freien Endbereiche jeweils mit dem besagten Trägerteil verbunden ist. Über die freien Endbereiche ist der bewegbare Bereich insbesondere einstückig an das Trägerteil angeformt oder mit dem separat ausgebildeten Trägerteil über das vorstehend beschriebene Befestigungsmittel verbunden. Hierbei können die Endbereiche das Trägerteil abschnittsweise überlappen.

Vorzugsweise ist der erste Anlagebereich der Schlossumlenkeinrichtung an einer Durchgangsöffnung der Schlossumlenkeinrichtung vorgesehen, durch die der Sicherheitsgurt geführt ist. Dabei kann jene Durchgangsöffnung im bewegbaren Bereich selbst ausgebildet sein. Es ist aber auch möglich, den Sicherheitsgurt am bewegbaren Bereich offen zu führen, d.h., die Durchgangsöffnung der Schlossumlenkeinrichtung zum Führen des Sicherheitsgurtes wird (zumindest in der Anfangsposition des bewegbaren Bereiches) durch den mittleren Steg des bewegbaren Bereiches und das besagte Trägerteil gebildet.

Der zweite Anlagebereich kann einstückig an die Schlosszunge angeformt sein, z.B. über das Trägerteil, von dem die Schlosszunge abgeht. Der zweite Anlagebereich kann auch als ein separates Teil ausgeführt sein, das lösbar, insbesondere durch Verschrauben, oder unlösbar, insbesondere durch Anspritzen, Gießen, Schweißen oder Nieten, mit der Schlosszunge verbunden sein kann. Vorzugsweise weist der zweite Anlagebereich zur Erhöhung der Reibung zwischen dem zweiten Anlagebereich und dem Sicherheitsgurt eine strukturierte Oberfläche auf.

Um den ersten Anlagebereich in seiner Anfangsposition zu arretieren, ist der erste Anlagebereich oder der bewegbare Bereich in der Anfangsposition vorzugsweise über eine Verbindung mit dem Trägerteil bzw. der Schlosszunge verbunden. Hierbei kann der erste Anlagebereich oder der bewegbare Bereich über jene Verbindung einstückig an das Trägerteil bzw. die Schlosszunge angeformt sein. Alternativ hierzu kann die besagte Verbindung durch eine Schweißverbindung (Punktschweißverbindung), eine Nietverbindung/Stiftverbindung mit Sollreißstelle oder eine Rastverbindung gebildet sein. Bei einer Nietverbindung werden zur Fixierung die Stifte anschließend plastisch deformiert; bei der Stiftverbindung sind die Stifte bezüglich der Aufnahmebohrungen mit einem Übermaß versehen, müssen also eingepresst werden; ein anschließendes Deformieren ist dann nicht mehr notwendig.

Die Verbindung ist insbesondere so ausgelegt, dass sie zu Beginn der Bewegung des ersten Anlagebereiches in die Endposition einreißt bzw. gelöst wird, wobei die Verbindung prinzipiell durch Zerstörung bzw. zerstörungsfrei aufgehoben werden kann. Sofern keine einstückige Anformung des bewegbaren Bereiches an das Trägerteil über jene Verbindung besteht, überlappt der bewegbare Bereich im Bereich der Verbindung bevorzugt das Trägerteil, so dass die besagte Verbindung zwischen übereinander liegenden Bereichen des Trägerteils bzw. bewegbaren Bereiches ausgebildet ist.

In einer Variante wird der zweite Anlagebereich durch eine ausgestanzte Lasche der Schlossumlenkeinrichtung gebildet, die zur Ausbildung des zweiten Anlagebereiches umgeschlagen oder gerollt ist.

Grundsätzlich weist die Umlenkeinrichtung vorzugsweise einen Grundkörper auf, der insbesondere aus einem Metall besteht, wobei der Grundkörper aus einer Metallplatine ausgestanzt oder ausgeschnitten sein kann.

In der einen Ausführungsform, bei der der bewegbare Bereich als separates Teil ausgebildet ist, wird dabei der Grundkörper durch das Trägerteil gebildet sowie die davon abgehende Schlosszunge. Weiterhin kann hierbei der Grundkörper den zweiten Anlagebereich umfassen.

In der anderen Ausführungsform der Erfindung, bei der der bewegbare Bereich einstückig an das Trägerteil angeformt ist, umfasst der Grundkörper das Trägerteil, die Schlosszunge und den bewegbaren Bereich sowie insbesondere auch die beiden Anlagebereiche. Trägerteil, bewegbarer Bereich und Schlosszunge sind hierbei vorzugsweise einstückig aneinander angeformt und liegen also vorzugsweise als ein einheitliches, ggf. ausgestanztes Teil vor.

Der so gebildete Grundkörper kann jeweils zumindest abschnittsweise von einer Hülle umgeben sein, die insbesondere aus einem Kunststoff bestehen kann. Die Hülle kann dabei durch Umspritzen des Grundkörpers bzw. Trägerteiles ausgebildet sein.

Vorzugsweise weist die Hülle eine Ausnehmung zur Aufnahme des bewegbaren Bereiches auf, d.h., der bewegbare Bereich kann insbesondere in jene Ausnehmung eingelassen sein, so dass er quer zu einer Erstreckungsebene, die durch das Trägerteil aufgespannt wird, nicht über die Hülle hinaus steht, also bündig in die Hülle eingepasst ist.

Insbesondere kann die Verbindung zum Arretieren des bewegbaren Bereiches in der Anfangsposition als eine Rastverbindung zwischen der Hülle und dem Bewegbaren Bereich ausgebildet sein, bei der der bewegbare Bereich vorzugsweise einen Bereich der Hülle hintergreift.

Weitere Merkmale und Vorteile der Erfindung sollen anhand der nachfolgenden Beschreibung von Ausführungsbeispielen der Erfindung anhand der Figuren verdeutlicht werden.

Bei den in den Figuren gezeigten Schlossumlenkeinrichtungen (mit Schlosszungen) wurde wegen einer besseren Übersicht teilweise auf die Darstellung der Hüllen (insbesondere Kunststoffumspritzungen), die die gezeigten Grundkörper umgeben können, verzichtet.

Es zeigen:
- Fig. 1:: eine Ausführungsform einer erfindungsgemäßen Schlossumlenkeinrichtung, mit einem einteiligen Grundkörper, bei dem ein bewegbare Bereich einstückig an ein Trägerteil angeformt ist;
- Fig. 2:: eine Abwandlung der in der Figur 1 gezeigten Schlossumlenkeinrichtung, mit einer Verbindung zwischen dem bewegbaren Bereich und dem Trägerteil zum Arretieren des bewegbaren Bereiches in seiner Anfangsposition;
- Fig. 3:: eine Abwandlung der in den Figuren 1 und 2 gezeigten Schlossumlenkeinrichtung, bei der ein zweiter Anlagebereich der Schlossumlenkreinrichtung zum Hemmen des Gurtdurchlaufs nicht an einem sich verjüngenden Ausschnitt vorgesehen ist, sondern eine Oberfläche zur Erhöhung der Reibung zwischen Sicherheitsgurt und Schlossumlenkeinrichtung aufweist;
- Fig. 4:: eine weitere Ansicht der in der Figur 3 gezeigten Schlossumlenkeinrichtung;
- Fig. 5:: eine Abwandlung der in den Figuren 3 und 4 gezeigten Schlossumlenkeinrichtung;
- Fig. 6 und 7:: schematische Schnittansichten einer Schlossumlenkeinrichtung nach der Art der Figuren 3 bis 5;
- Fig. 8:: eine weitere Schlossumlenkreinrichtung, mit einem einstückig angeformten bewegbaren Bereich und mit einem zweiten Anlagenbereich an einem sich kontinuierlich stärker verjüngenden Ausschnitt des Trägerteiles zum Hemmen des Gurtdurchlaufes;
- Fig. 9-11:: eine weitere Ausführungsform einer erfindungsgemäßen Schlossumlenkeinrichtung, wobei der bewegbare Bereich als ein separates Teil ausgebildet ist, das mittels eines zusätzlichen Befestigungsmittels am Trägerteil befestigt ist, und wobei der zweite Anlagebereich an einem sich verjüngenden Ausschnitt des Trägerteiles vorgesehen ist;
- Fig. 12-14:: eine Abwandlung der in den Figuren 9 - 11 gezeigten Schlossumlenkeinrichtung, wobei der bewegbare Bereich als ein separates Teil ausgebildet ist, das mittels eines Befestigungsmittels am Trägerteil befestigt ist, und wobei der zweite Anlagebereich eine strukturierte Oberfläche aufweist;
- Fig. 15:: eine Verbindung zwischen dem bewegbaren Bereich und dem Trägerteil in Form einer Schweißverbindung bei einer Schlossumlenkeinrichtung gemäß den Figuren 9-11 bzw. 12-14;
- Fig. 16:: eine Verbindung zwischen dem bewegbaren Bereich und dem Trägerteil in Form einer Stiftverbindung oder Nietverbindung bei einer Schlossumlenkeinrichtung gemäß den Figuren 9-11 bzw. 12-14;
- Fig. 17:: eine Verbindung zwischen dem bewegbaren Bereich und dem Trägerteil in Form einer Rastverbindung bei einer Schlossumlenkeinrichtung gemäß den Figuren 9-11 bzw. 12-14; und
- Fig. 18:: eine Verbindung zwischen dem bewegbaren Bereich und dem Trägerteil in Form einer weiteren Rastverbindung bei einer Schlossumlenkeinrichtung gemäß den Figuren 9-11 bzw. 12-14.

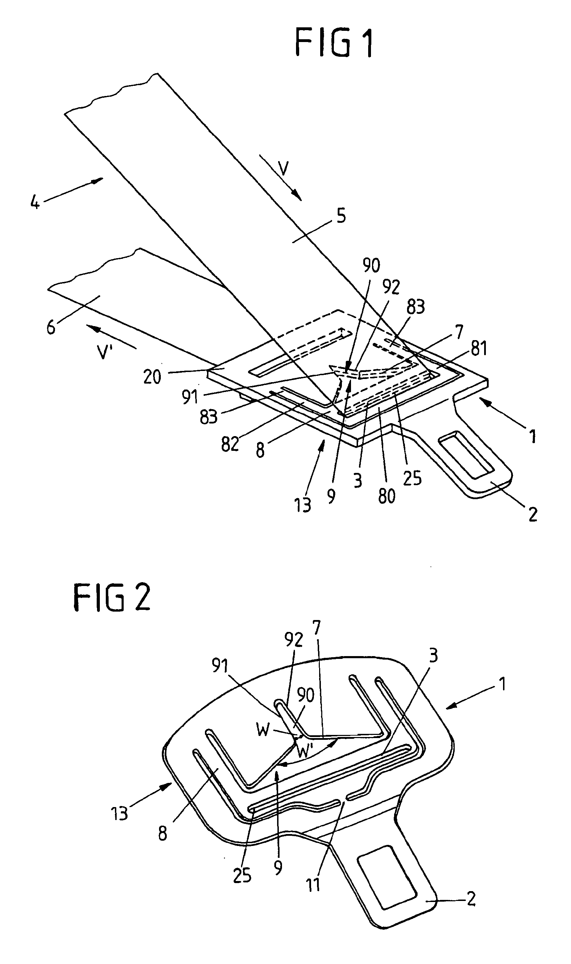

Fig.1 zeigt eine erste Ausführungsform (Vorderansicht mit Gurtverlauf) in einer Ausgangsstellung (oder Ausgangsposition); der bewegbare Bereich 8 (Deformationselement, Kraftbegrenzerfunktion) mit erstem Anlagebereich 3 und der zweite Anlagebereich 7 (Sperrfunktion) sind in die Schlosszunge 2 integriert (einstückig), d.h., alle vorgenannten Teile sind in Form eines einheitlichen Grundkörpers 13 einstückig aneinander angeformt (z.B. in Form eines Stanzteiles).

So ist der bewegbare Bereich 8 im Wesentlichen u-förmig ausgebildet, d.h., er weißt zwei Seitenschenkel 81, 82 und einen mittleren Steg 80 auf, wobei die beiden Seitenschenkel 81, 82 vom mittleren Steg 80 abgehen und je einen Endbereich 83 aufweisen, über den der bewegbare Bereich 8 mit einem Trägerteil 20 der Schlossumlenkreinrichtung 1 verbunden ist, von dem die Schlosszunge 2 der Schlossumlenkeinrichtung 1 abgeht, wobei die Schlosszunge 2 insbesondere einstückig an das Trägerteil 20 angeformt ist. Gemäß der Figur 1 ist der bewegbare Bereich 8 über die besagten Endbereiche 83 einstückig an das Trägerteil 20 angeformt, wobei dieses den bewegbaren Bereich 8 in der Erstreckungsebene des bewegbaren Bereiches 8, die durch dessen mittleren Steg 80 sowie die Schenkel 81, 82 aufgespannt wird, allseitig umgibt. D.h., das Trägerteil 20 weist eine mittige, durchgängige Aussparung auf, in der der bewegbare Bereich 8 zumindest in einer Anfangsposition angeordnet ist.

Die Schlosszunge 2 verläuft insbesondere geneigt zur Erstreckungsebene des Trägerteiles 20 bzw. des bewegbaren Bereiches 8 (bezogen auf die Anfangsposition des bewegbaren Bereiches).

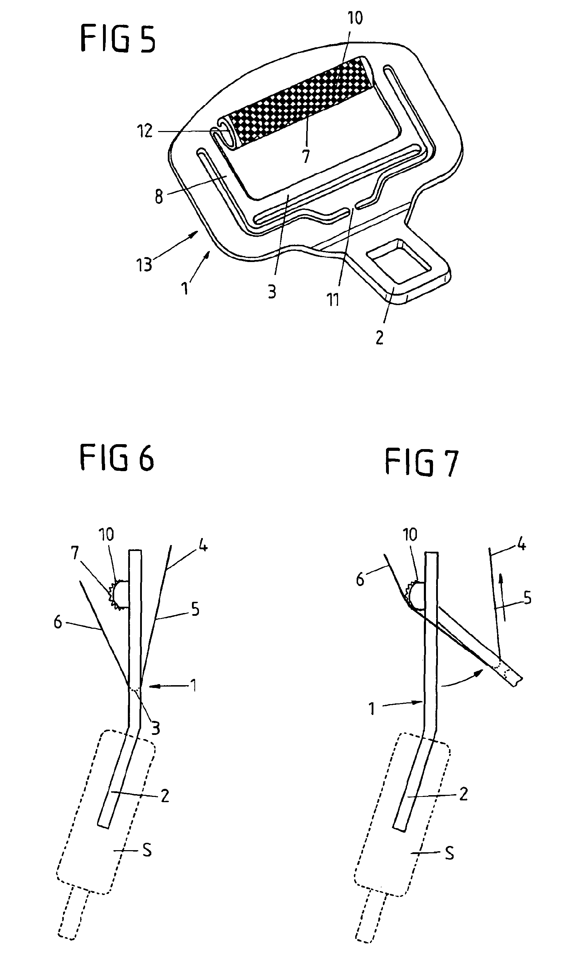

Im mittleren Steg 80 des bewegbaren Bereiches 8 ist eine Durchgangsöffnung 25 ausgebildet, durch die hindurch ein Sicherheitsgurt 4 geführt ist, wobei der Sicherheitsgurt 4 entlang einer ersten Gurtverlaufsrichtung V in Form eines Schultersegmentes 5 zur Durchgangsöffnung 25 verläuft, dort an einem ersten, die Durchgangsöffnung 25 abschnittsweise begrenzenden Anlagebereich 3 umgelenkt wird und entlang einer zweiten Gurtverlaufsrichtung V' als Beckensegment 6 vom ersten Anlagebereich 3 abgeht (vgl. auch Figuren 6 und 7).

Beim bestimmungsgemäßen Gebrauch der Schlossumlenkeinrichtung 1 verläuft dabei bei einem Sicherheitsgurt 4 in Form eines Dreipunktsicherheitsgurtes das Beckensegment 6 des Sicherheitsgurtes 4 in der zweiten Gurtverlaufsrichtung V' entlang des Beckens eines mit dem Sicherheitsgurt 4 angegurteten Insassen, und das Schultersegment 5 des Sicherheitsgurtes 4 verläuft diagonal über den Oberkörper des Insassen entlang der ersten Gurtverlaufsrichtung V.

Der bewegbare Bereich 8 ist durch den Sicherheitsgurt 4 aus einer Anfangsposition gemäß Figur 1, in der sich der bewegbare Bereich 8 entlang der Erstreckungsebene des Trägerteiles 20 erstreckt (vgl. auch Figur 6) in Richtung auf das Schultersegment 5 auslenkbar (vgl. auch Figur 7), wobei er insbesondere aus jener Erstreckungsebene heraus gebogen wird. Diese Verformung, die insbesondere plastisch (inelastisch) erfolgt, kommt einer Schwenkbewegung gleich, da der bewegbare Bereich 8 insbesondere im Bereich seiner Endbereiche 83 gebogen bzw. verformt wird. Jene Schwenkbewegung aus der Anfangsposition in eine davon verschiedene Endposition erfolgt ab einer vordefinierbaren, im Rückhaltefall am Schultersegment 5 angreifenden Mindestkraft. Durch die besagte Bewegung des bewegbaren Bereiches 8 wird die resultierende am Sicherheitsgurt 4 (Schultersegment 5) angreifende Kraft zum Schutz des Insassen begrenzt.

Vorzugsweise kommt der Sicherheitsgurt 4 (insbesondere das Beckensegment 6) erst bei der Bewegung des bewegbaren Bereiches 8 aus der Anfangsposition in die Endposition zur Anlage an den zweiten Anlagebereich 7, der so ausgebildet ist, dass er den Gurtdurchlauf durch die Schlossumlenkeinrichtung 1, d.h., ein freies Entlanggleiten des Sicherheitsgurtes 4 am ersten Anlagebereich 3 bzw. durch die Durchgangsöffnung 25 hindurch, zumindest signifikant hemmt, ggf. stoppt (vgl. Figur 7). Dabei kann der Sicherheitsgurt 4 gemäß Figur 7 zwischen dem ersten und dem zweiten Anlagebereich entlang einer dritten Gurtverlaufsrichtung V" verlaufen, die von der ersten und zweiten Gurtverlaufsrichtung V, V' verschieden ist bzw. geneigt zu diesen verläuft.

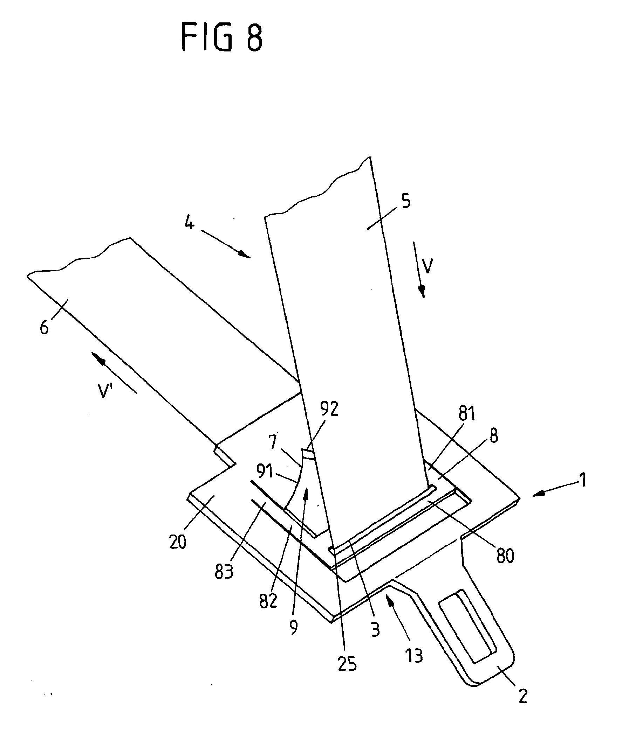

Zum Hemmen bzw. Stoppen (totale Hemmung) des Gurtdurchlaufes kann der zweite Anlagebereich 7 gemäß Figur 1 als ein Randbereich des Trägerteils 20 ausgebildet sein, der einen sich verjüngenden, insbesondere (im Wesentlichen) keilförmigen Ausschnitt 9 im Trägerteil 20 begrenzt, wobei jener keilförmige Ausschnitt (vgl. auch Figur 8) ein Kerbe 90 aufweisen kann, also einen Abschnitt des Ausschnittes 9, in dem einander gegenüberliegende Ränder 91, 92 des Ausschnittes 9 einen signifikant kleineren Winkel W einschließen als außerhalb jenes Abschnittes (Winkel W'), vgl. Figur 2. Kommt der Sicherheitsgurt 4 zur Anlage an den solchermaßen ausgeformten zweiten Anlagebereich 7, wird der Sicherheitsgurt 4 durch die auf ihn einwirkenden Kräfte in jenen Ausschnitt 9 hineingezogen, insbesondere in die besagte Kerbe 90, was zur (ggf. totalen) Hemmung des Gurtdurchlaufs durch die Schlossumlenkeinrichtung 1 führt.

Durch die gleichzeitige Hemmung des Gurtdurchlaufes und die Entlastung des Schultersegmentes 5 durch die Bewegung des bewegbaren Bereiches 8 wird insbesondere die im Rückhaltefall durch das Schultersegment 5 in den Oberkörper (insbesondere Thorax) des Insassen eingeleitete Kraft herabgesetzt, um den Insassen vor gurtbedingten Verletzungen zu schützen.
Fig.2 zeigt eine weitere Ausführungsform (Vorderansicht ohne Gurtverlauf) mit einem bewegbaren Bereich 8 in der Ausgangsstellung (Anfangsposition). Grundsätzlich entspricht diese Ausführungsform der in der Fig.1 dargestellten Ausführungsform. Der bewegbare Bereich 8 ist hier über eine zusätzliche Verbindung 11 an der Schlossumlenkeinrichtung 1 festgelegt, wobei die besagte Verbindung 11 den mittleren Steg 80 des bewegbaren Bereiches 8 mit dem Trägerteil 20 verbindet, so dass jene Verbindung 11 zwischen dem mittleren Steg 80 (in der Anfangsposition) und der Schlosszunge 2 angeordnet ist. Die Verbindung 11 ist vorliegend als ein Steg ausgebildet, über den der mittlere Steg 80 einstückig an das Trägerteil 20 angeformt ist und als eine ab einer bestimmten Kraft lösbare (aufreißbare) Verbindung ausgelegt. Der Aufreißbereich sichert die Position des bewegbaren Bereiches 8 in der normalen Gebrauchssituation des Gurtsystems und garantiert ein Bewegen (Verschwenken) des bewegbaren Bereiches 8 in einem Crashfall erst bei Erreichen eines definierten Kraftniveaus.

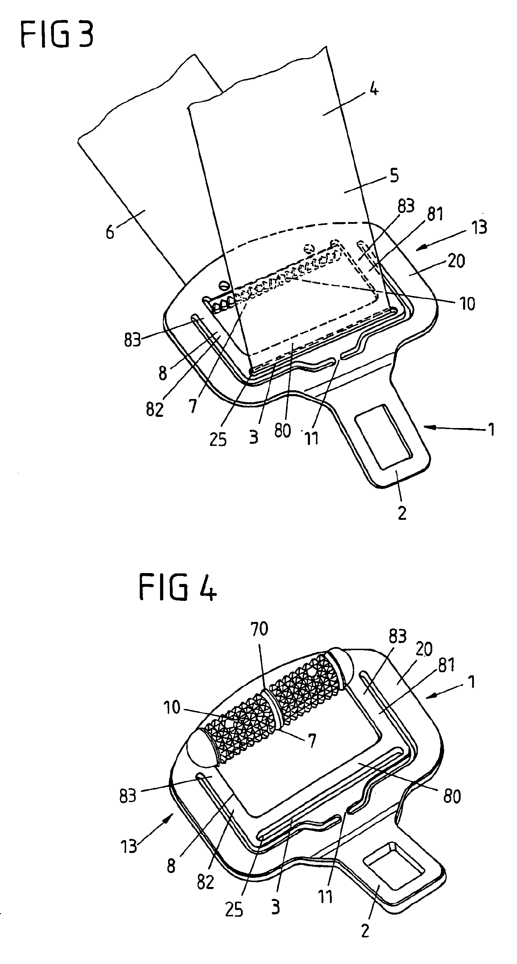

Fig.3 zeigt die dem Schultersegment 5 im bestimmungsgemäßen Gebrauchsfall zugewandte Oberseite einer weiteren Ausführungsform einer erfindungsgemäßen Schlossumlenkeinrichtung 1 (Vorderansicht mit Gurtverlauf) in der Ausgangsstellung, d.h., mit einem bewegbaren Bereich 8 in der Anfangsposition. Im Unterschied zu den Figuren 1 und 2 ist der zweite Anlagebereich 7 nicht mehr ein einstückiger Bestandteil der Schlossumlenkeinrichtung 1 (d.h., nicht mehr einstückig angeformt), sondern ist als separates Teil ausgeführt und in geeigneter Weise mit einem Teil, insbesondere dem Trägerteil 20, der Schlossumlenkeinrichtung 1 verbunden (lösbar - z.B. verschraubt; unlösbar - z.B. angespritzt/gegossen, vernietet). Ein Vorteil dieser Ausführungsform ist, dass der zweite Anlagebereich 7 über eine entsprechende Strukturierung einfacher hinsichtlich seiner Sperrfunktion anpassbar ist.

Die Fig.4 zeigt die der Oberseite abgewandte Unterseite der Schlossumlenkeinrichtung 1 gemäß Figur 3 (Rückansicht ohne Gurtverlauf) in der Ausgangstellung, d.h., mit einem bewegbaren Bereich 8 in der Anfangsposition, wobei hier erkennbar ist, dass der zweite Anlagebereich 7 abschnittsweise zylindermantelförmig ausgebildet ist und eine Oberfläche 10 mit einer Oberflächenstruktur aufweist, die im Vergleich zum ersten Anlagebereich 3 eine höhere Reibung zwischen dem Sicherheitsgurt 4 und dem zweiten Anlagebereich 7 bedingt. Dabei kann der zweite Anlagebereich 7 einen oder mehrere Stege 70 aufweisen, an dem bzw. an denen der Sicherheitsgurt 4 entlang gleiten kann, sofern die auf ihn wirkenden Kräfte nicht allzu hoch sind, wobei der Sicherheitsgurt 4 ab einer gewissen Mindestkraft vollends zur Anlage an die umgebende strukturierte Oberfläche 10 des zweiten Anlagebereiches gelangt, so dass die Reibung zwischen dem zweiten Anlagenbereich 7 und dem Sicherheitsgurt 4 entsprechend gesteigert wird.

Die Fig.5 zeigt eine weitere Ausführungsform (Rückansicht ohne Gurtverlauf) in Ausgangsstellung, d.h., mit einem bewegbaren Bereich in der Anfangsposition. Hier wird wieder eine komplett einstückige Ausführungsform dargestellt, d.h. alle Bestandteile sind einstückig aneinander angeformt. Der zweite Anlagebereich 7 wird durch einen mittleren Teil der Schlossumlenkeinrichtung 1 bzw. des Trägerteils 20 gebildet, welches in Form einer Lasche 12 teilweise ausgestanzt und umgeschlagen/gerollt wird. Vor dem Umschlagen wird dem zweiten Anlagebereich 7, der für den späteren Kontakt mit dem Beckensegment 6 vorgesehen ist bzw. dessen Oberfläche 10 eine Struktur eingeprägt, so dass die Reibung zwischen dem Sicherheitsgurt 4 und dem zweiten Anlagebereich 7 (im Vergleich zum ersten Anlagebereich 3) erhöht ist.

Die Figuren 6 und 7 zeigen jeweils eine Seitenansicht einer erfindungsgemäßen Schlossumlenkeinrichtung gemäß Figuren 3 bis 5 mit Gurtverlauf, die auch den Gurtverlauf der anderen Ausführungsformen erkennen lässt.

Dabei zeigt die Fig.6 eine Schlossumlenkeinrichtung 1 in der normalen Gebrauchssituation (Ausgangsstellung), bei der sich der bewegbare Bereich 8 in der Anfangsposition befindet und das Beckensegment 6 nicht mit dem zweitem Anlagebereich 7 in Kontakt steht.

Des Weiteren zeigt die Fig.7 die Gurtumlenkeinrichtung 1 im Crashfall, d.h., nach einer Bewegung des bewegbaren Bereiches 8 aus der Anfangsposition in die Endposition, in der der Sicherheitsgurt 4 zusätzlich am zweiten Anlagebereich 7 anliegt und daher der Gurtdurchlauf des Sicherheitsgurtes 4 durch die Schlossumlenkeinrichtung 1 gehemmt oder gesperrt ist.

Die Bewegung des bewegbaren Bereiches 8 in die Endposition erfolgt dabei dann, wenn eine im Schultersegment 5 in Richtung eines oberen Gurtumlenkpunktes wirkende Kraft (entgegen der ersten Gurtverlaufsrichtung V) bei Erreichung eines definierten Niveaus die Verbindung 11 zwischen dem bewegbaren Bereich 8 und dem Gurtumlenkelement 1 (im Aufreißbereich der Verbindung 11) löst. Die über den ersten Anlagebereich 3 in den bewegbaren Bereich 8 eingeleitete Kraft führt dadurch zu dessen Bewegung (Verschwenken) aus der Anfangsposition in die Endposition. Während der Bewegung (ab einem bestimmten Schwenkwinkel) kontaktiert das Beckensegment 6 den zweiten Anlagebereich 7, wobei die Kontaktkräfte mit der weiteren Bewegung bzw. mit zunehmendem Schwenkwinkel ansteigen. Treten nun Kräfte auf, die über das Beckensegment 6 eingeleitet werden, wird eine Verlagerung des Sicherheitsgurtes 4 in der ersten bzw. zweiten Gurtverlaufsrichtung V, V' vom Schultersegment 5 in Richtung Beckensegment 6 vollständig unterbunden, bzw. ist nur auf einem wesentlich höheren Kraftniveau möglich. Werden dagegen Kräfte über das Schultersegment 5 eingeleitet, ist eine Verlagerung des Sicherheitsgurtes entgegen der ersten bzw. zweiten Gurtverlaufsrichtung V, V' vom Beckensegment 6 in Richtung Schultersegment 5 möglich.

Figur 8 zeigt ein weitere erfindungsgemäße Schlossumlenkeinrichtung 1, die im Wesentlichen der Figur 1 entspricht, wobei am Ausschnitt 9 im Unterschied zur Figur 1 keine abgegrenzte Kerbe 90 vorgesehen ist, sondern der Ausschnitt 9 sich zunehmend stärker verjüngt, so dass die beiden den Ausschnitt 9 begrenzenden, aufeinander zulaufenden Ränder 91, 92 spitz zulaufen und dabei jeweils konvex gewölbt sind.

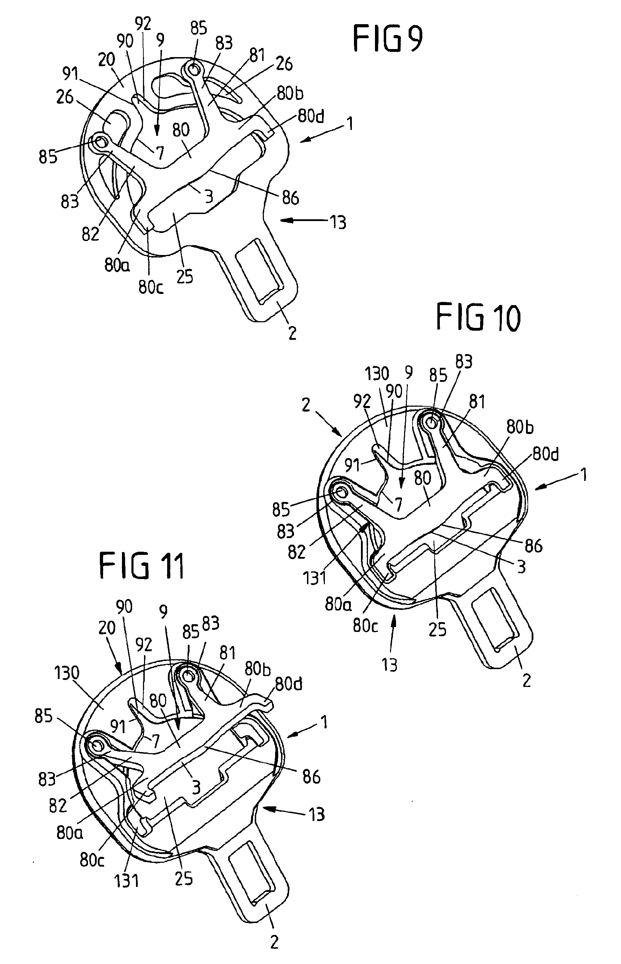

Figur 9 zeigt eine weitere Ausführungsform einer erfindungsgemäßen Schlossumlenkeinrichtung 1, bei der im Unterschied zu den Figuren 1 bis 8 der bewegbare Bereich 8 als ein separates Bauteil ausgebildet ist, das mittels eines zusätzlichen Befestigungsmittels 85 am Trägerteil 20 befestigt ist, und zwar auf einer dem Schultersegment 5 im bestimmungsgemäßen Gebrauchsfall zugewandten Oberseite des Trägerteiles 20, so dass der bewegbare Bereich 8 über einer mittigen Aussparung des Trägerteiles 20 angeordnet ist, die durch das Trägerteil 20 ringförmig (umlaufend) umgeben bzw. begrenzt wird. Dabei weist der bewegbare Bereich 8 einen mittleren Steg 80 auf, von dem zwei Seitenschenkel 81, 82 mit je einem freien Endbereich 83 abgehen. Über diese beiden freien Endbereiche 83 ist der bewegbare Bereich 8 jeweils mittels des Befestigungsmittels 85 an dem Trägerteil 20 festgelegt, wobei die beiden Endbereiche 83 das Trägerteil 20 abschnittsweise überlappen. Im Falle einer Schweißverbindung zwischen den Endbereichen 83 und dem Trägerteil 20 ist diese daher zwischen dem jeweiligen Endbereich 83 und dem Trägerteil 20 ausgebildet. Alternativ kann das Befestigungsmittel 85 als eine Niet-, Stift- oder Schraubverbindung ausgebildet sein, bei der je eine Niete, ein Stift oder eine Schraube den jeweiligen Endbereich 83 mit dem Trägerteil 20 verbindet, und zwar so, dass die Oberseite der Schlossumlenkeinrichtung 1 bzw. des Trägerteils 20 dem bewegbaren Bereich 8 bzw. dessen Endbereichen 83 zugewandt ist.

Gemäß Figur 9 steht der mittlere Steg 80 mit je einem Endabschnitt 80a, 80b entlang seiner Längsachse, entlang der er sich erstreckt, über die Seitenschenkel 81, 82 hinaus, wobei von jenen Endabschnitten 80a, 80b jeweils Fortsätze 80c, 80d entgegen gesetzt zu den Seitenschenkeln 81, 82 abgehen, also zu beiden Seiten des ersten Anlagebereiches 3 angeordnet sind, die verhindern, dass der Sicherheitsgurt 4 seitlich vom ersten Anlagebereich 3 abrutschen kann. Zusätzlich trägt das Trägerteil 20 insbesondere in der Anfangsposition des bewegbaren Bereiches 8 zur Führung des Sicherheitsgurtes 4 bei, da der am mittleren Steg 80 ausgebildete erste Anlagebereich 3 und die davon abgehenden Fortsätze 80c, 80d zusammen mit einer dem ersten Anlagebereich 3 gegenüberliegenden Seite des Trägerteiles 20 eine Durchgangsöffnung 25 für den Sicherheitsgurt 4 bilden. Dies stellt eine Alternative zu den Ausführungsformen gemäß Fig. 1 bis 8 dar, bei denen der Sicherheitsgurt 4 durch eine vollständig im bewegbaren Bereich 8 ausgebildete Durchgangsöffnung 25 geführt ist. Des Weiteren kann der erste Anlagebereich 3 eine konvexe Wölbung 86 aufweisen, die ebenfalls der sicheren Führung des Sicherheitsgurtes 4 am ersten Anlagebereich 4 dient.

Die Endabschnitte 80a, 80b des mittleren Stegs 80 des bewegbaren Bereiches 8 mit den davon abgehenden Fortsätzen 80c, 80d überlappen in der Anfangsposition des bewegbaren Bereiches 8 jeweils abschnittsweise die Oberseite des Trägerteils 20.

Fig. 9 zeigt lediglich einen durch das Trägerteil 20 und die davon abragende Schlosszunge 2 gebildeten Grundkörper 13 einer erfindungsgemäßen Schlossumlenkeinrichtung 1, mit dem daran befestigten, separat ausgebildeten bewegbaren Bereich 8, wobei der Grundkörper 13 zusätzlich abschnittsweise von einer Hülle 130, insbesondere aus einem Kunststoff, umgeben ist, die durch Umspritzen des Grundkörpers 13 auf den Grundkörper 13 aufgebracht sein kann, wozu gemäß Figur 9 Öffnungen 26 am Trägerteil 20 vorgesehen seien können, um den Halt der Hülle 130 am Grundkörper 13 zu verbessern. Insbesondere umschließt jene Hülle 130 das Trägerteil 20, wobei die Schlosszunge 2 aus der Hülle 130 heraus steht, d.h., nicht durch die Hülle 130 umhüllt ist.

In der Hülle 130 ist vorzugsweise eine Ausnehmung 131 vorgesehen, in die der bewegbare Bereich 8 in seiner Anfangsposition derart eingebettet ist, dass er entlang einer Normalen zur Erstreckungsebene des Trägerteils 20 nicht aus der Hülle 130 heraussteht. Natürlich ist das Vorhandensein einer solchen Hülle 130 nicht zwingend notwendig.

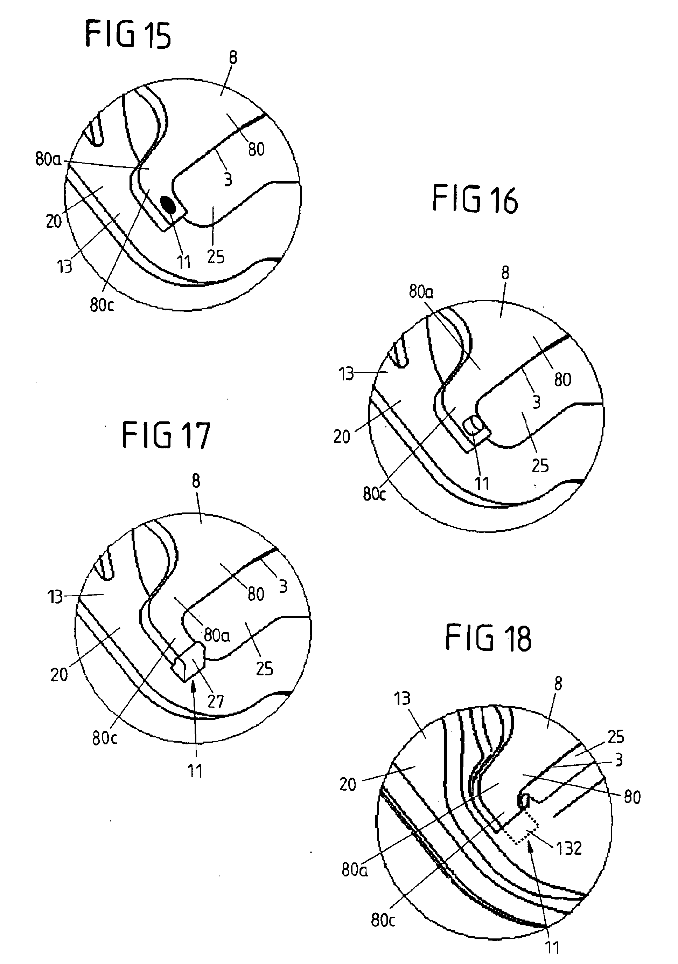

Die Hülle 130 kann ferner gemäß Figur 18 im Bereich der Fortsätze 80c, 80d des bewegbaren Bereiches 8 je einen Hinterschnitt 132 aufweisen, der in der Anfangsposition des bewegbaren Bereiches 8 jeweils von einem zugeordneten Fortsatz 80c, 80d des bewegbaren Bereiches 8 hintergriffen wird, so dass als besagte Verbindung 11 eine Rastverbindung zwischen dem bewegbaren Bereich 8 und dem Trägerteil 20 geschaffen ist, die erst ab einer gewissen Mindestkraft eine Bewegung des bewegbaren Bereiches 8 aus der Anfangsposition in die Endposition gestattet.

Alternativ hierzu besteht gemäß Figur 17 die Möglichkeit, dass die besagten Fortsätze 80c, 80d jeweils einen an das Trägerteil 20 angeformten und davon abstehenden Rastbereich 27 hintergreifen, der insbesondere einstückig an die Oberseite des Trägerteiles 20 angeformt sein kann.

Des Weiteren besteht die Möglichkeit, dass der bewegbare Bereich 8 zur Ausbildung der besagten Verbindung 11 gemäß Figur 15 mittels einer Schweißverbindung (Punktschweißverbindung) mit dem Trägerteil 20 verbunden ist, wobei jene Schweißverbindung eine Sollreißstelle definiert, die ab einer gewissen Mindestkraft durchtrennt wird, so dass sich der bewegbare Bereich 8 aus der Anfangsposition in die Endposition bewegen kann. Vorzugsweise verbindet jene Verbindung 11 die beiden Fortsätze 80c, 80d jeweils mit dem Trägerteil 20.

Anstelle einer Schweißverbindung kann gemäß Figur 16 auch eine Niet- oder Stiftverbindung mit einer Sollreißstelle vorgesehen sein.

Ähnlich den Figuren 1 und 2 begrenzt der zweite Anlagebereich 7 gemäß den Figuren 9 bis 11 einen konkaven Ausschnitt 9 des Trägerteiles 20, der eine zusätzliche Kerbe 90 aufweist, so dass der Gurtdurchlauf beim Anliegen des Sicherheitsgurtes 4 am zweiten Anlagebereich 7 gehemmt oder ggf. gestoppt wird.

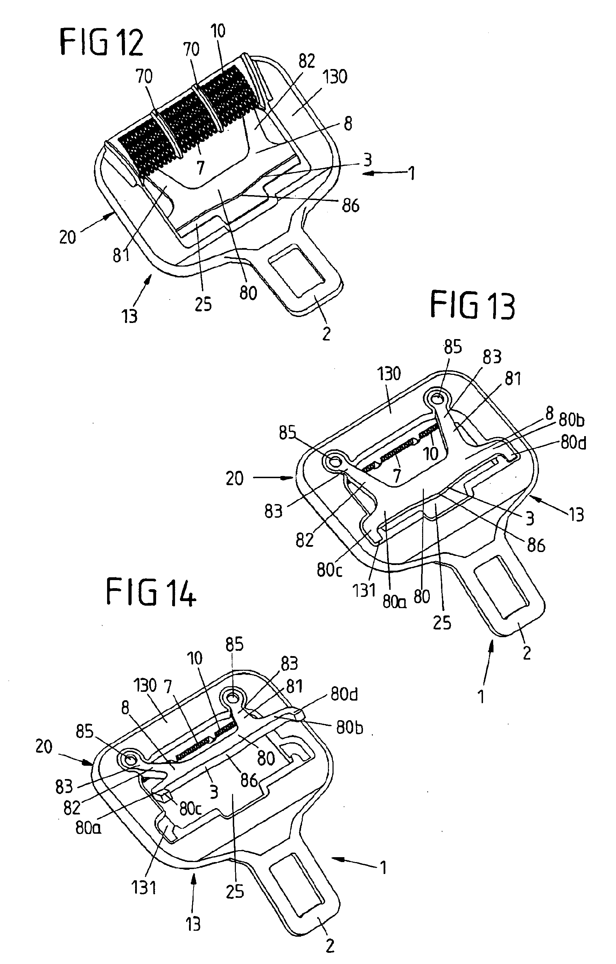

Die Figuren 12 bis 14 zeigen eine Abwandlung der in den Figuren 9 bis 11 gezeigten Ausführungsform, bei der im Unterschied zu den Figuren 9-11 kein zweiter Anlagebereich 3 an einem sich verjüngendem Ausschnitt 9 vorgesehen ist, sondern ein zweiter Anlagebereich 7 nach Art der Figuren 3 bis 5.

## Patentansprüche

1. Schlossumlenkeinrichtung für ein Kraftfahrzeug zum Umlenken eines Sicherheitsgurtes, mit
- einer Schlosszunge (2) zum Einstecken in eine Schlossschnalle (S) und
- einem mit der Schlosszunge (2) verbundenen ersten Anlagebereich (3), um den der Sicherheitsgurt (4) zum Umlenken des Sicherheitsgurtes (4) herumlegbar ist, so dass der Sicherheitsgurt (4) in ein Schultersegment (5) und ein Beckensegment (6) unterteilt wird, die in unterschiedlichen Richtungen vom ersten Anlagebereich (3) abgehen, wobei
- der erste Anlagebereich (3) aus einer Anfangsposition, in der der Sicherheitsgurt (4) an der Umlenkeinrichtung (1) entlang gleiten kann, in eine Endposition bewegbar ist, und
einen mit der Schlosszunge (2) verbundenen zweiten Anlagebereich (7), der dazu eingerichtet und vorgesehen ist, den Sicherheitsgurt (4) zu kontaktieren, nachdem der erste Anlagebereich (3) aus seiner Anfangsposition heraus bewegt wurde, um ein Entlanggleiten des Sicherheitsgurtes (4) an der Umlenkeinrichtung (1) zu hemmen, wobei der erste Anlagebereich (3) über einen bewegbaren Bereich (8) der Schlossumlenkeinrichtung (1) mit der Schlosszunge (2) verbunden ist, wobei der bewegbaren Bereich (8) dazu ausgebildet ist, derart mit dem Sicherheitsgurt (4) zusammen zu wirken, dass der bewegbare Bereich (8) durch eine am Schultersegment (5) angreifende Kraft eine Bewegung ausführt, wobei der erste Anlagebereich (3) aus der Anfangsposition in die Endposition mitgenommen wird, **gekennzeichnet dadurch, dass** die Bewegung in einer mit einer Verformung des bewegbaren Bereiches (8) einhergehende Schwenkbewegung besteht, und wobei der erste Anlagebereich (3) einstückig an den bewegbaren Bereich (8) angeformt ist.

2. Schlossumlenkeinrichtung nach einem der vorhergehenden Ansprüche, **dadurch gekennzeichnet, dass** der zweite Anlagebereich (7) bei der Bewegung des ersten Anlagebereichs (3) in die Endposition in seiner Lage bezüglich der Schlosszunge (2) nicht verändert wird.

3. Schlossumlenkeinrichtung nach einem der vorhergehenden Ansprüche, **dadurch gekennzeichnet, dass** der erste Anlagebereich (3) einstückig an die Schlosszunge (2) angeformt ist, insbesondere über den bewegbaren Bereich (8).

4. Schlossumlenkeinrichtung nach einem der Ansprüche 1 bis 3, **dadurch gekennzeichnet, dass** die Schlossumlenkeinrichtung (1) ein Trägerteil (20) zum Tragen des bewegbaren Bereiches (8) aufweist, wobei insbesondere an jenem Trägerteil (20) der zweite Anlagebereich (7) vorgesehen ist, und wobei insbesondere von jenem Trägerteil (20) die Schlosszunge (2) abgeht.

5. Schlossumlenkeinrichtung nach einem der Ansprüche 1 bis 4, **dadurch gekennzeichnet, dass** der bewegbare Bereich (8) einstückig an das Trägertei! (20) angeformt ist oder einstückig an die Schlosszunge (2) angeformt ist, insbesondere über das Trägerteil (20).

6. Schlossumlenkeinrichtung nach Anspruch 4, **dadurch gekennzeichnet, dass** der bewegbare Bereich (8) als ein separates Teil ausgebildet ist, das mit dem Trägerteil (20) über ein Befestigungsmittel (85) verbunden ist, wobei es sich bei jenem Befestigungsmittel (85) insbesondere um eine Schweißverbindung, eine Nietverbindung oder eine Schraubverbindung handelt.

7. Schlossumlenkeinrichtung nach einem der Ansprüche 1 bis 6, **dadurch gekennzeichnet, dass** der bewegbare Bereich (8) einen mittleren Steg (80) aufweist, von dem zwei Seitenschenkel (81, 82) abgehen, die jeweils einen freien Endbereich (83) aufweisen, wobei der bewegbare Bereich (8) insbesondere über die freien Endbereiche (83) mit dem Trägerteil (20) verbunden ist.

8. Schlossumlenkeinrichtung nach einem der vorhergehenden Ansprüche, **dadurch gekennzeichnet, dass** der erste Anlagebereich (3) an einer Durchgangsöffnung (25) der Schlossumlenkeinrichtung (1) ausgebildet ist, durch die der Sicherheitsgurt (4) führbar ist, wobei insbesondere die Durchgangsöffnung (25) im bewegbaren Bereich (8) ausgebildet ist.

9. Schlossumlenkeinrichtung nach einem der vorhergehenden Ansprüche, **dadurch gekennzeichnet, dass** der zweite Anlagebereich (7) einstückig an die Schlosszunge (2) angeformt ist.

10. Schlossumlenkeinrichtung nach einem der Ansprüche 1 bis 8, **dadurch gekennzeichnet, dass** der zweite Anlagebereich (7) als ein separates Teil ausgeführt ist, das lösbar, insbesondere durch Verschrauben, oder unlösbar, insbesondere durch Anspritzen, Gießen, Schweißen oder Nieten, mit der Schlosszunge (2) verbunden ist.

11. Schlossumlenkeinrichtung nach einem der vorhergehenden Ansprüche, **dadurch gekennzeichnet, dass** der zweite Anlagebereich (7) zur Erhöhung der Reibung zwischen dem zweiten Anlagebereich (7) und dem Sicherheitsgurt (4) eine strukturierte Oberfläche (10) aufweist.

12. Schlossumlenkeinrichtung nach Anspruch 4 oder einem der Ansprüche 5 bis 11 soweit rückbezogen auf Anspruch 4, **dadurch gekennzeichnet, dass** der erste Anlagebereich (3) oder der bewegbare Bereich (8) in der Anfangsposition über eine Verbindung (11) mit dem Trägerteil (20) oder der Schlosszunge (2) verbunden ist, um den ersten Anlagebereich (3) in seiner Anfangsposition zu arretieren.

13. Schlossumlenkeinrichtung nach einem der vorhergehenden Ansprüche, **dadurch gekennzeichnet, dass** die Umlenkeinrichtung (1) einen Grundkörper (13) aufweist, der insbesondere aus einer Metallplatine ausgestanzt ist, wobei insbesondere der Grundkörper (13) zumindest abschnittsweise von einer Hülle (130) umgeben ist, insbesondere aus einem Kunststoff.

14. Schlossumlenkeinrichtung nach Anspruch 6 und nach Anspruch 13 soweit nicht rückbezogen auf Anspruch 5, **dadurch gekennzeichnet, dass** der Grundkörper (13) durch das Trägerteil (20) und die davon abgehende Schlosszunge (2) gebildet wird.

15. Schlossumlenkeinrichtung nach Anspruch 4 und nach Anspruch 13 soweit nicht rückbezogen nach Anspruch 6, **dadurch gekennzeichnet, dass** der Grundkörper (13) das Trägerteil (20), die Schlosszunge (2) und den bewegbaren Bereich (8) umfasst und insbesondere auch die beiden Anlagebereiche (3, 7).

## Claims

1. Lock deflection device for a motor vehicle for deflecting a seat belt, comprising
- a lock tongue (2) for insertion into a lock buckle (S) and
- a first contact area (3) connected to the lock tongue (2) around which the seat belt (4) can be laid to deflect the seat belt (4), so that the seat belt (4) is divided into a shoulder segment (5) and a pelvis segment (6), which go off in different directions from the first contact area (3), wherein
- the first contact area (3) can be moved from an initial position, in which the seat belt (4) can slide along on the deflection device (1), into a final position, and
- a second contact area (7) connected to the lock tongue (2), which is arranged and provided to contact the seat belt (4) after the first contact area (3) is moved out of the initial position, in order to restrain the seat belt (4) from sliding along on the deflection device (1), wherein the first contact area (3) is connected to the lock tongue (2) via a movable area (8) of the lock deflection device (1), wherein the movable area (8) is designed to interact with the safety belt (4) in a way that the movable area (8) performs a movement due to a force acting on the shoulder segment (5), wherein the first contact area (3) is a taken along from the initial position to the final position,
**characterized in that**
the movement consists of a pivoting movement accompanied by a deformation of the movable area (8), and wherein the first contact area (3) is integrally formed with the movable area (8).

2. Lock deflection device according to one of the preceding claims, **characterized in that** upon movement of the first contact area (3) into the final position, the second contact area (7) is not changed in its position with respect to the lock tongue (2).

3. Lock deflection device according to one of the preceding claims, **characterized in that** the first contact area (3) is integrally formed with the lock tongue (2), particularly via the movable area (8).

4. Lock deflection device according to one of the claims 1 to 3, **characterized in that** the lock deflection device (1) comprises a carrier part (20) for carrying the movable area (8), wherein particularly the second contact area (7) is provided on the carrier part (20), and wherein particularly the lock tongue (2) goes off from said carrier part (20).

5. Lock deflection device according to one of the claims 1 to 4, **characterized in that** the movable area (8) is integrally formed with the carrier part (20) or is integrally formed with the lock tongue (2), particularly via the carrier part (20).

6. Lock deflection device according to claim 4, **characterized in that** the movable area (8) is designed as a separate part that is connected to the carrier part (20) via a fastening means (85), wherein particularly said fastening means (85) is a welded connection, a rivet connection or a screw connection.

7. Lock deflection device according to one of the claims 1 to 6, **characterized in that** the movable area (8) comprises a central bar (80) from which two side arms (81, 82) go off, each of which comprises a free end region (83), wherein the movable area (8) is particularly connected to the carrier part (20) via the free end regions (83).

8. Lock deflection device according to one of the preceding claims, **characterized in that** the first contact area (3) is formed at a through-opening (25) of the lock deflection device (1), through which the safety belt (4) can be passed, wherein particularly the through-opening (25) is formed in the movable area (8).

9. Lock deflection device according to one of the preceding claims, **characterized in that** the second contact area (7) is integrally formed with the lock tongue (2).

10. Lock deflection device according to one of the claims 1 to 8, **characterized in that** the second contact area (7) is formed as a separate part that is releasably connected to the lock tongue (2), particularly by screwing, or non-releasably, particularly by spraying, casting, welding or riveting.

11. Lock deflection device according to one of the preceding claims, **characterized in that** the second contact area (7) comprises a structured surface (10) for increasing the friction between the second contact area (7) and the safety belt (4).

12. Lock deflection device according to claim 4 or one of the claims 5 to 11 when referred back to claim 4, **characterized in that** the first contact area (3) or the movable area (8) is connected to the carrier part (20) or the lock tongue (2) in the initial position by a connection (11), in order to arrest the first contact area (3) in its initial position.

13. Lock deflection device according to one of the preceding claims, **characterized in that** the deflection device (1) comprises a base body (13) that is particularly punched-out of a metal blank, wherein particularly the base body (13) is surrounded by a covering (130) at least in sections, particularly out of a plastic.

14. Lock deflection device according to claim 6 and according to claim 13 when not referred back to claim 5, **characterized in that** the base body (13) is formed by the carrier part (20) and the lock tongue (2) going off therefrom.

15. Lock deflection device the according to claim 4 and according to claim 13 when not referred back to claim 6, **characterized in that** the base body (13) comprises the carrier part (20), the lock tongue (2) and the movable area (8) and in particular also the two contact areas (3, 7).

## Revendications

1. Dispositif de renvoi de verrou pour un véhicule automobile pour le renvoi d'une ceinture de sécurité, comprenant
- une languette de verrouillage (2) à enficher dans une boucle de verrouillage (S) et
- une première zone d'appui (3) reliée à la languette de verrouillage (2), autour de laquelle la ceinture de sécurité (4) peut être placée pour son renvoi de sorte que la ceinture de sécurité (4) soit divisée en un segment d'épaule (5) et un segment de bassin (6) qui partent dans des directions différentes depuis la première zone d'appui (3),
- la première zone d'appui (3) pouvant être déplacée entre une position de départ, dans laquelle la ceinture de sécurité (4) peut glisser le long du dispositif de renvoi (1), et une position finale, et
une seconde zone d'appui (7) reliée à la languette de verrouillage (2) qui est aménagée et prévue pour entrer en contact de la ceinture de sécurité (4) après que la première zone d'appui (3) ait été déplacée de sa position de départ afin de bloquer le glissement de la ceinture de sécurité (4) le long du dispositif de renvoi (1), la première zone d'appui (3) étant reliée par une zone mobile (8) du dispositif de renvoi de verrou (1) à la languette de verrouillage (2), la zone mobile (8) étant conçue pour coopérer avec la ceinture de sécurité (4) de telle manière que la zone mobile (8) réalise un mouvement dû à une force agissant sur le segment d'épaule (5), dans lequel la première zone d'appui (3) est entraînée de la position de départ à la position finale, **caractérisé en ce que** le mouvement consiste en un pivotement s'accompagnant d'une déformation de la zone mobile (8), et dans lequel la première zone d'appui (3) est formée d'un seul tenant sur la zone mobile (8).

2. Dispositif de renvoi de verrou selon l'une quelconque des revendications précédentes, **caractérisé en ce que** la position de la seconde zone d'appui (7) par rapport à la languette de verrouillage (2) n'est pas modifiée lors du mouvement de la première zone d'appui (3) vers la position finale.

3. Dispositif de renvoi de verrou selon l'une quelconque des revendications précédentes, **caractérisé en ce que** la première zone d'appui (3) est formée d'un seul tenant sur la languette de verrouillage (2), en particulier par la zone mobile (8).

4. Dispositif de renvoi de verrou selon l'une quelconque des revendications 1 à 3, **caractérisé en ce que** le dispositif de renvoi de verrou (1) présente une portion de support (20) pour porter la zone mobile (8), la seconde zone d'appui (7) étant en particulier prévue sur cette portion de support (20), et la languette de verrouillage (2) s'étendant en particulier depuis cette portion de support (20).

5. Dispositif de renvoi de verrou selon l'une quelconque des revendications 1 à 4, **caractérisé en ce que** la zone mobile (8) est formée d'un seul tenant sur la portion de support (20) ou est formée d'un seul tenant sur la languette de verrouillage (2), en particulier par la portion de support (20).

6. Dispositif de renvoi de verrou selon la revendication 4, **caractérisé en ce que** la zone mobile (8) est réalisée comme une partie séparée qui est reliée à la portion de support (20) par un moyen de fixation (85), s'agissant pour chaque moyen de fixation (85) en particulier d'une liaison par soudage, rivetage ou vissage.

7. Dispositif de renvoi de verrou selon l'une quelconque des revendications 1 à 6, **caractérisé en ce que** la zone mobile (8) présente une âme centrale (80), depuis laquelle s'étendent deux branches latérales (81, 82), lesquelles présentent chacune une zone d'extrémité libre (83), la zone mobile (8) étant reliée à la portion de support (20) en particulier par les zones d'extrémité libre (83).

8. Dispositif de renvoi de verrou selon l'une quelconque des revendications précédentes, **caractérisé en ce que** la première zone d'appui (3) est réalisée sur une ouverture de passage (25) du dispositif de renvoi de verrou (1), par laquelle la ceinture de sécurité (4) peut être guidée, l'ouverture de passage (25) étant réalisée en particulier dans la zone mobile (8).

9. Dispositif de renvoi de verrou selon l'une quelconque des revendications précédentes, **caractérisé en ce que** la seconde zone d'appui (7) est formée d'un seul tenant sur la languette de verrouillage (2).

10. Dispositif de renvoi de verrou selon l'une quelconque des revendications 1 à 8, **caractérisé en ce que** la seconde zone d'appui (7) est réalisée comme une partie séparée qui est reliée de manière détachable, en particulier par vissage, ou de manière inamovible, en particulier par injection, moulage, soudage ou rivetage, à la languette de verrouillage (2).

11. Dispositif de renvoi de verrou selon l'une quelconque des revendications précédentes, **caractérisé en ce que** la seconde zone d'appui (7) présente une surface structurée (10) pour l'augmentation du frottement entre la seconde zone d'appui (7) et la ceinture de sécurité (4).

12. Dispositif de renvoi de verrou selon la revendication 4 ou l'une quelconque des revendications 5 à 11, dans la mesure où elle est rattachée à la revendication 4, **caractérisé en ce que** la première zone d'appui (3) ou la zone mobile (8) est reliée dans la position de départ par une liaison (11) à la portion de support (20) ou à la languette de verrouillage (2) afin de bloquer la première zone d'appui (3) dans sa position de départ.

13. Dispositif de renvoi de verrou selon l'une quelconque des revendications précédentes, **caractérisé en ce que** le dispositif de renvoi (1) présente un corps de base (13), qui est en particulier estampé dans une platine métallique, le corps de base (13) étant en particulier entouré au moins par portion par une enveloppe (130), en particulier en une matière plastique.

14. Dispositif de renvoi de verrou selon la revendication 6 et la revendication 13, dans la mesure où elle n'est pas rattachée à la revendication 5, **caractérisé en ce que** le corps de base (13) est formé par la portion de support (20) et la languette de verrouillage (2) s'étendant depuis celle-ci.

15. Dispositif de renvoi de verrou selon la revendication 4 et la revendication 13, dans la mesure où elle n'est pas rattachée à la revendication 6, **caractérisé en ce que** le corps de base (13) comprend la portion de support (20), la languette de verrouillage (2) et la zone mobile (8) et en particulier aussi les deux zones d'appui (3, 7).
